# EUROPEAN PATENT SPECIFICATION

(11) **EP 4 473 239 B1**
(45) Date of publication and mention of the grant of the patent: **04.11.2026**
(21) Application number: 23750423.8
(22) Date of filing: 03.02.2023
(51) Int. Cl.: F17C 1/00, F17C 1/04, F17C 1/16, F17C 13/08, F16J 12/00, F17C 1/02, F17C 1/08, F17C 13/04, F17C 13/06, B67C 3/24, B67C 3/26, F16J 15/06, F16J 15/10

(54) **SEALING SYSTEM BETWEEN A MANIFOLD AND A LIQUID CONTAINER**
DICHTUNGSSYSTEM ZWISCHEN EINEM VERTEILER UND EINEM FLÜSSIGKEITSBEHÄLTER
SYSTÈME D'ÉTANCHÉITÉ ENTRE UN COLLECTEUR ET UN RÉCIPIENT DE LIQUIDE

(30) Priority: 04.02.2022 US 202263267586 P
(43) Date of publication of application: 11.12.2024
(73) Proprietor: Siemens Healthcare Diagnostics Inc., Tarrytown, NY 10591 (US)
(72) Inventor: DAUME, Dominik Andreas, 69121 Heidelberg (DE); BÄCKER, Jan-Peter, 61118 Bad Vilbel (DE); OTTO, Ralf, 65195 Wiesbaden (DE)
(74) Representative: Schweitzer, Klaus
(86) International application number: PCT/US2023/061913
(87) International publication number: WO 2023/150664

(56) References cited:
- EP-A1- 2 706 017
- EP-B1- 2 742 272
- WO-A1-2021/096885
- DE-U1- 202016 006 546
- US-A- 5 287 987
- US-A1- 2003 071 078
- US-A1- 2011 210 515
- US-A1- 2017 268 727
- US-A1- 2018 202 554
- US-B1- 9 199 768
- US-B2- 10 415 752
- US-B2- 7 125 187

## Description

### TECHNICAL FIELD

Various examples generally relate to an improved sealing mechanism between a manifold and a liquid container and, specifically, to a manifold connectable to a liquid container holding a liquid and through which liquid can be supplied to and removed from the liquid container. A corresponding system comprising a liquid container configured to hold a liquid and a manifold through which liquid is supplied to and removed from the liquid container is provided.

### BACKGROUND

A manifold is a part attached to a liquid container for releasing liquids into it and extracting liquids from it. In order to avoid leakages of liquid, the interface between the two components must be tight. The different material properties and tolerances of the two components make a simple, robust, and repeatable seal difficult.US 9 199 768 B1 discloses a two-piece stopper for retaining items in a neck of a bottle. The stopper includes a stopper core and a stopper sleeve. The stopper core includes a core body, a top flange and a sleeve flange. The top flange is formed on a top of the core body and the sleeve flange is formed on a bottom thereof. At least one hole is formed through the core body to receive a glass tube or the like. At least one o-ring groove is formed in the at least one hole. An o-ring is inserted into each o-ring groove. A counterbore may be formed in the core body to receive a hose barb. The stopper sleeve includes a cylindrical inner diameter and a tapered outer diameter. The stopper sleeve is retained between the top and the sleeve flanges. US 5 287 987 A is directed to a light weight filament wound pressure vessel for retaining gases under high pressure, in which a liner forms a gas barrier for the vessel, and in which said vessel is strengthened by a wound filament as an overwrap about said liner. This liner is formed of a single layer bi-axially biaxially oriented polyethylene terephthalate material. EP 2 742 272 B1 relates to a device for storing and dispensing liquid and/or gaseous media under pressure. The device comprises a media container made of plastic receiving the medium, at least one valve connection element connected to the media container and at least one valve element connectable to the valve connection element. The media container comprises an outwardly protruding collar having a collar outer wall and a crane inner wall. The upper end of the collar defines the free cross section of an opening of the media container, wherein the valve connection element is arranged in the region of this opening and the outer wall of the collar is surrounded by an inner wall of the valve connection element. US 7 125 187 B2 relates to a closure system for a container. The disclosed system includes a stopper sealing a neck of a container without leaving a gap between a top surface of the neck and a bottom surface of the stopper. The sealing member comprises a flange, an inner sleeve extending from the flange, and an outer sleeve surrounding the inner sleeve. The outer sleeve extends from the flange and is configured to be inserted into a container.

According to conventional sealings between manifolds and liquid containers, perfluoroelastomeric compound (FFKM) sealing rings are mounted on an acrylic (poly(methyl methacrylate), or PMMA) block that has the functions of a fluid-carrying manifold. The sealing rings seal against the liquid container and ensure the tightness of the assembly. A disadvantage of this solution is the very high production costs of the PMMA manifold. As a conventional alternative to a manifold made of PMMA, a component made of injection-molded polypropylene is also used. Further conventional manifolds use surface-to-surface seals between manifold and liquid container opening, e.g., short cone-shaped or beveled edges or chamfers are used on manifolds, which seal against a cone-shaped or beveled opening or chamfer of the liquid container, or conical stoppers, which are simply pressed onto a cylindrical liquid container opening. This may result in only a single sealing edge. The risk is therefore high that small inaccuracies, such as an uneven surface or edge of the opening, which the manifold contacts, may lead to leaks.

Accordingly, the conventional designs easily produce slight leakages in view of various challenges in the production and application of manifolds. The designs lack robustness against manufacturing and application process tolerances, wherein the conventional designs require exact positional and/or angular adjustment between manifold and liquid container. For example, if the longitudinal axis of the liquid container opening and the longitudinal axis of the manifold are not aligned during handling or application, a leakage may easily occur. Furthermore, in all applications, an axial force is required to press and hold the sealing surfaces tightly onto each other to prevent leakage of liquid.

Therefore, the idea of the presented approach is to provide techniques for an improved sealing mechanism between a liquid container and a manifold, which is more robust against manufacturing and process tolerances.

### SUMMARY

This need is met by the features of the independent claims. Further aspects are described in the dependent claims.

The techniques according to the present disclosure are described with respect to the claimed manifolds as well as with respect to the claimed systems comprising a manifold and a liquid container. It is to be understood that features, advantages, or alternative embodiments herein may be assigned to the other claimed objects, and vice versa. In particular, the manifolds may be improved with features described in the context of the systems, and the systems may be improved with features described in the context of the manifolds.

A manifold connectable to a liquid container and through which liquid may be supplied to and/or removed from the liquid container, comprises a sealing protrusion having an outer circumferential sealing surface, which may be inserted into an opening of the liquid container, in order to contact the walls of the opening to form a liquid tight seal between the manifold and the liquid container.

A system comprises a liquid container, which is configured to hold a liquid, and a manifold. The liquid container defines an opening, wherein the opening is defined by an inner circumferential sealing surface surrounding the opening (i.e., side wall of the opening). In other words, the opening may define an inner surface, which may extend along a longitudinal axis of the opening, which is oriented from the outside of the liquid container to the inside of the liquid container through a center of the opening. In such a way, the opening may define an inner surface, which a sealing protrusion of a manifold may engage or contact.

The system further comprises a manifold, through which liquid may be supplied to, and/or can be removed from, the liquid container, wherein the liquid may flow through one or more flow channels of the manifold. The manifold comprises a circumferential (i.e., peripheral) sealing protrusion, which may be inserted into the opening of the liquid container, to form a liquid tight seal between the manifold the liquid container. The sealing protrusion comprises an outer circumferential sealing surface. The sealing protrusion may form an opening, or define a central area, which extends around the longitudinal axis of the sealing protrusion.

In a connected state, the manifold is located on the opening, wherein the sealing protrusion is inserted into the opening, to supply liquid to, or to remove liquid from, the liquid container, wherein the sealing protrusion extends into the opening such that the outer circumferential sealing surface contacts the inner circumferential sealing surface to form a seal between the manifold and the liquid container.

In an unconnected state, a (e.g., maximal) circumferential length of the outer circumferential sealing surface, which is inserted into the opening, is larger than a (e.g., corresponding or minimum) circumferential length of the inner circumferential sealing surface, such that in a connected state, material is displaced to arrange the protrusion in the opening. Specifically, the system may define a contact area of the sealing protrusion, which is the region of the outer circumferential sealing surface in contact with the inner circumferential sealing surface for forming the seal. Correspondingly, the system may define a contact area of the opening side walls, which is the part of the inner circumferential sealing surface in contact with the outer circumferential sealing surface for forming the seal. In the contact area, the outer and/or inner sealing surfaces may be curved surfaces. The contact area may be located in a predefined distance from the entrance of the opening, wherein within the predefined distance, the inner and outer sealing surfaces are not in contact. The inner circumferential sealing surface may be a tubular surface, substantially along the longitudinal axis. According to the claimed invention, in an unconnected state, a circumferential length in the contact area of the outer circumferential sealing surface is larger than a corresponding circumferential length in the contact area of the inner circumferential sealing surface. In some examples, a circumferential length, or all circumferential lengths, in the contact area of the outer circumferential sealing area are longer than all circumferential lengths in the contact area of the inner circumferential sealing surface, i.e., the contact area in a connected state between the outer and inner circumferential sealing surfaces. In other words, corresponding paths on the inner and outer sealing surface, which are in contact in a connected state, may have different circumferential lengths.

The disclosed sealing mechanism exhibits several advantages over existing solutions:

No external axial forces are needed for proper sealing of the device. In the presented solution, sealing forces are of a radial nature and are a result of the design's geometry.

The seal can be established without any further parts being necessary (e.g., O-rings, flat sealings, etc.) by solely inserting the manifold into the liquid container.

The proposed sealing concept is also tolerant against form deviations of the liquid container as well as small angles (axial misalignment) between the manifold and liquid container. For example, the design is robust against deformations, such as ovality, or other production or handling deformations. This tolerance stems from the fact that for proper sealing, merely the differences of circumferential length are relevant.

The proposed design is less vulnerable to axial forces coming from increasing load conditions applied by increasing weight of the liquid-filled liquid container.

Further, the proposed design is tolerant against axial displacement, as the contact area of the sealing surfaces is at a distance from the entrance edge of the opening of the liquid container, wherein the manifold may be moved until the contact area of the outer sealing surface reaches the entrance edge of the opening, and wherein the seal may be maintained.

In such a way, the manifold and the liquid container, in particular the sealing protrusion and the tubular opening, more specifically the inner circumferential sidewall of the tubular opening and the outer circumferential sidewall of the sealing protrusion (as sealing surfaces), may form a press-fit, or an interference fit, or a contour seal.

The manifold may have a longitudinal axis, which may extend through a middle of the circumferential sealing protrusion, and/or along the main flow direction in the fluid channels through the opening, i.e., through the sealing protrusion. In the connected state, the longitudinal axis of the manifold may extend from the outside of a liquid container to the inside of a liquid container through a center of an opening of the liquid container and, in particular, may be aligned with the longitudinal axis of the opening, such that they may have a common longitudinal axis.

The outer circumferential sealing surface may be a curved surface, which may be curved in a circumferential direction or around the longitudinal axis, and which further may be curved also in a direction along the longitudinal axis. According to the claimed invention, the outer circumferential sealing surface is a curved surface (i.e., the distance of the surface to the longitudinal axis varies) along the longitudinal axis, wherein the surface may be curved in a convex shape, and/or monotone shape (only one maximum of the distance from the longitudinal axis) or non-monotone shape (several local maxima of the distance from the longitudinal axis, and/or may have a free-form shape. Accordingly, the circumferential lengths along the longitudinal axis may have only one or several maxima and/or minima. In a preferred embodiment, the circumferential length of the outer circumferential sealing surface has only one maximum and decreases to both sides, until the circumferential length is smaller than the one of the opening.

The same rules for the distances of the sealing surfaces from the middle axis (longitudinal axis) at specific points on the longitudinal axis can be applied to the circumferential lengths of the surfaces around the longitudinal axis at the specific points on the longitudinal axis, and vice versa.

A maximum circumferential length of the outer circumferential sealing surface in an axial direction may be located within a region starting from an end of the sealing protrusion facing towards the liquid container and extending along the longitudinal axis to about 3/4, preferably 2/3, more preferably 1/3, of the length of the sealing protrusion in the axial direction until the sealing protrusion ends, i.e., is connected to the manifold, for example at a cover surface substantially perpendicular, i.e., transverse, to the longitudinal axis.

In various embodiments, the parts of the inner circumferential sealing area and the outer circumferential sealing surface, which contact or touch each other for forming the liquid tight seal, may be referred to as contact area (or contact surface) of the respective inner and outer circumferential sealing surfaces. The contact area may, in some examples, comprise >5%, or >10%, or >25%, or >40% of the area of the outer circumferential sealing surface. The length along the longitudinal axis of the contact surface may, in some examples, comprise >5%, or >10%, or >25%, or >40% of the axial length of the outer circumferential sealing surface.

In various embodiments, the inner circumferential sidewalls of the opening may be the elastic part of the seal, wherein the sealing protrusion may be the inelastic or rigid part of the seal. In various embodiments, the opening, i.e., the inner circumferential sidewalls of the opening, are the inelastic or rigid part, wherein the sealing protrusion may be the elastic part of the seal. This may be achieved, for example, by different materials, and/or material thickness in a transverse direction, and/or support structures/geometries.

In other words, in various embodiments, in the connected state, the sealing protrusion may (elastically) deform the inner circumferential sealing surface of the opening. In various embodiments, the inner circumferential sealing surface of the opening may (elastically) deform the sealing protrusion. In various embodiments, an upper region of the sealing protrusion may deform an upper region of the inner circumferential sealing surface of the opening, wherein at the same time another lower region of the sealing protrusion may be (elastically) deformed by another lower region of the inner circumferential sealing surface.

The sealing protrusion may be strengthened by one or more support structures extending in the inner surface of the sealing protrusion, for example ribs extending across the center area of the sealing protrusion (inner area, with regard to the longitudinal axis, that is formed or surrounded by the sealing protrusion, specifically the inner and outer circumferential surfaces of the sealing protrusion). The ribs may extend fully or only partly along the axial length of the sealing protrusion, such that the complete or at least a part of the sealing protrusion may be more rigid than the opening sidewalls, and, thus, may elastically deform the opening sidewalls. The support structures thus may connect to transfer forces from and to opposite sides of the sealing protrusion.

The sealing protrusion may have the form of a circumferential sealing lip, e.g., a flexible sealing protrusion with inner and outer circumferential surfaces around the longitudinal axis, extending along the longitudinal axis from a cover surface of the manifold in a direction to the side, where the liquid container is to be connected to the manifold. The sealing protrusion may comprise an inner circumferential surface, which may fully or at least partially extend along the outer circumferential sealing surface of the sealing lip.

The inner circumferential surface may be a curved surface, in particular, a concave surface.

The liquid container may be pressurized to have an inner pressure, which is higher than a pressure of an environment surrounding the manifold outside the liquid container. By raising the pressure in the inside of the liquid container, the higher pressure inside the liquid container applies a force onto the inner circumferential surface of the sealing lip, whereby the sealing lip (i.e., the outer circumferential sealing surface of the protrusion) is pressed against the inner circumferential sealing surface of the opening and improves the tolerance robustness of the seal.

The inner circumferential sealing surface of the opening may be a tubular surface, and may extend essentially in parallel to the longitudinal axis of the opening and/or the longitudinal axis of the manifold in the connected state. The inner circumferential sealing surface may be a flat/uncurved surface along the longitudinal axis. The inner circumferential sealing surface may also extend in an angle to the longitudinal axis of the opening and/or the longitudinal axis of the manifold in the connected state.

When the manifold is completely placed onto the liquid container, and the protrusion is fully inserted into the opening, such that, e.g., a cover plate or cover surface of the manifold contacts an upper rim of liquid container, the outer circumferential sealing surface may not contact the inner circumferential sealing surface within a predetermined distance along the longitudinal axis from the entrance of the opening, specifically 1/3 or more of the length of the protrusion.

The system may further comprise an axial retaining member, which may be connected to the liquid container and the manifold and provides an axial retaining force to secure the manifold to the liquid container.

The sealing protrusion may be elastically deformed by contact to the inner sealing surface, wherein material along the contact area may be displaced and the sealing protrusion may be elongated or stretched in an axial direction towards the liquid container.

The sealing protrusion may extend in an axial direction towards the manifold and be connected to the manifold in a connection area, wherein the connection area is located closer to the longitudinal axis than the inner sealing surface. In such a way, the sealing lip may extend outward from the center/longitudinal axis towards the opening sidewalls.

In some examples, in an unconnected state, the outer sealing surface may extend away from the longitudinal axis of the manifold over the full axial length. In some examples, in an unconnected state, the inner sealing surface may extend away from the longitudinal axis of the manifold over the full axial length. In other words, the distance of one or both surfaces from the longitudinal axis, or the circumferential length, may steadily increase along the longitudinal axis in a direction towards the liquid container.

In an unconnected state, the sealing protrusion may extend in a larger angle with respect to the longitudinal axis of the manifold, than in the connected state.

In a connected state, the inner and outer sealing surfaces may form a contact area, which extends along >10% of the length of the sealing protrusion in an axial direction.

A cross-sectional area of the opening traverse to the longitudinal axis and the corresponding cross-sectional area of the sealing protrusion may have an oval shape. It is to be understood that other cross-sectional shapes are possible, and provide orientation of the manifold when connected to the liquid container.

The inner and/or outer sealing surface may be axially symmetric with regard to the respective longitudinal axis of the manifold or the opening.

The (complete) inner and/or outer sealing surfaces may be surfaces with a concave or convex curvature, i.e., they may have only one minimum/maximum in the distance from the longitudinal axis. One of the inner and outer sealing surfaces may be a convex surface, and the other one of the inner and outer sealing surfaces may be a concave surface, with respect to a direction along the longitudinal axis. The inner and outer sealing surfaces may be both convex surfaces along the longitudinal axis.

According to the claimed invention, the outer sealing surface defines at least one additional circumferential sealing lip, which extends from the outer sealing surface in a direction along the longitudinal axis towards the liquid container, and contacts the inner sealing surface.

The sealing protrusion may have a stiffer upper section along the longitudinal axis, which elastically deforms the sidewalls of the opening, and an elastic lower section, e.g., a sealing lip as described herein, which is elastically deformed by the inner sealing surface.

It is to be understood that the features mentioned above, and features yet to be explained below, can be used not only in the respective combinations indicated, but also in other combinations or in isolation, without departing from the scope of the present invention as defined by the appended claims. In particular, features of the disclosed embodiments may be combined with each other in other embodiments.

Therefore, the above summary is merely intended to give a short overview of some features of some embodiments and implementations, and is not to be construed as limiting. Other embodiments may comprise features other than those explained above.

### BRIEF DESCRIPTION OF THE DRAWINGS

These and other objects of the invention will be appreciated and understood by those skilled in the art from the detailed description of the preferred embodiments and the following drawings in which like reference numerals refer to like elements.
Fig. 1 schematically illustrates a system in which liquid from a bottle is fed via a manifold and a valve to a liquid container, according to various examples.
Fig. 2 schematically illustrates the system of Fig. 1 without the bottle when the manifold is connected to the liquid container, according to various examples.
Fig. 3 schematically illustrates a sealing protrusion of a manifold, according to various examples.
Fig. 4 schematically illustrates a manifold with a sealing protrusion, according to various examples.
Fig. 5 schematically illustrates a system comprising a manifold with a sealing protrusion connected to an opening of a liquid container, according to various examples.
Fig. 6 schematically illustrates an elastic deformation of the sealing protrusion, according to various examples.
Fig. 7 schematically illustrates a further sealing protrusion, according to various examples.
Fig. 8 schematically illustrates a system comprising a manifold with the sealing protrusion of Fig. 8, which is connected to an opening of a liquid container, according to various examples.

### DETAILED DESCRIPTION

In the following, embodiments of the invention will be described in detail with reference to the accompanying drawings. It should be understood that the following description of embodiments is not to be taken in a limiting sense. The scope of the invention is not intended to be limited by the embodiments described hereinafter or by the drawings, which are taken to be illustrative examples of the general inventive concept. The features of the various embodiments may be combined with each other, unless specifically noted otherwise.

The drawings are to be regarded as being schematic representations, and elements illustrated in the drawings are not necessarily shown to scale. Rather, the various elements are represented such that their function and general purpose becomes apparent to a person skilled in the art. Any connection or coupling between components or functional blocks of physical or functional units shown in the drawings and described hereinafter may be implemented by an indirect connection or coupling.

A fluid-carrying component (manifold) is attached to a liquid container for releasing liquids into it, or extracting liquid from it. To avoid leakage, the interface between the two components must be tight. The different material properties and tolerances of the two components make a simple, robust, and repeatable seal challenging.

In some conventional seals between a manifold and a liquid container, perfluoroelastomeric compound (FFKM) sealing rings are mounted on an acrylic (poly(methyl methacrylate), or PMMA) block that has the functions of the fluid-carrying manifold. The sealing rings seal against the liquid container and ensure the tightness of the assembly. A disadvantage of this solution is the very high production costs of the PMMA manifold. As a conventional alternative to a manifold made of PMMA, a component made of injection-molded polypropylene is also used. Further conventional manifolds use surface-to-surface seals between manifold and liquid container opening, e.g., short cone-shaped or beveled edges or chamfers are used on manifolds, which seal against a cone-shaped or beveled opening or chamfer of the liquid container, or conical stoppers, which are simply pressed into a cylindrical liquid container opening. This may result in only a single sealing edge. The risk is therefore high that small inaccuracies, such as an uneven opening of the liquid container, which may lead to a slightly undefined position along the longitudinal axis of the opening and light tilt relative to the longitudinal axis, may lead to leaks.

Therefore, the conventional designs easily produce slight leakages in view of various challenges in the production and application of manifolds. The designs lack robustness against manufacturing and application process tolerances, wherein the conventional designs require exact positional and/or angular adjustment between manifold and liquid container. For example, if a longitudinal axis of the liquid container opening and a longitudinal axis of the manifold are not aligned during handling or application, a leakage may easily occur. Furthermore, in all application cases, an axial force is required to press and hold the sealing surfaces onto each other to prevent leakage of liquid.

The aim of the disclosed mechanisms is to create a robust design for the permanent sealing of the interface between manifold and liquid container (which herein may also be referred to as a blow molded part, or subreservoir). The material properties may be adjusted based on the type of seal, geometries, application forces, or pressures, to realize the proposed roles as elastic or rigid sealing partner of the manifolds and liquid container openings.

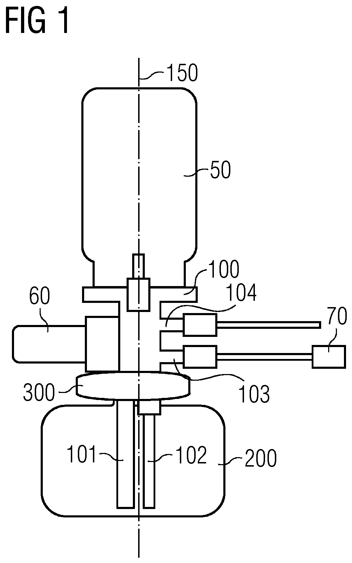

Fig. 1 schematically illustrates a system in which liquid from a bottle is fed via a manifold and a valve to a liquid container, according to various examples.

As can be seen in Fig. 1, a manifold 100 is placed on a liquid container 200 to control the supply of liquid, such as cleaning liquid, from a bottle 50 through a valve 60 to the liquid container 200. In order to fill the liquid container 200 from valve 60, the liquid to be filled to the container is fed into the container using the filling straw 101, wherein the liquid can be removed from the container using the aspiration straw 102 and using the aspiration line connection 103 to which an aspiration line 70 is connected. Furthermore, a vent opening 104 is provided for the exchange of air. In a connected state, the manifold 100 and the liquid container 200 are arranged such that they have a common longitudinal axis 150. An optional retaining element 300 may be used to secure the manifold 100 to the container 200.

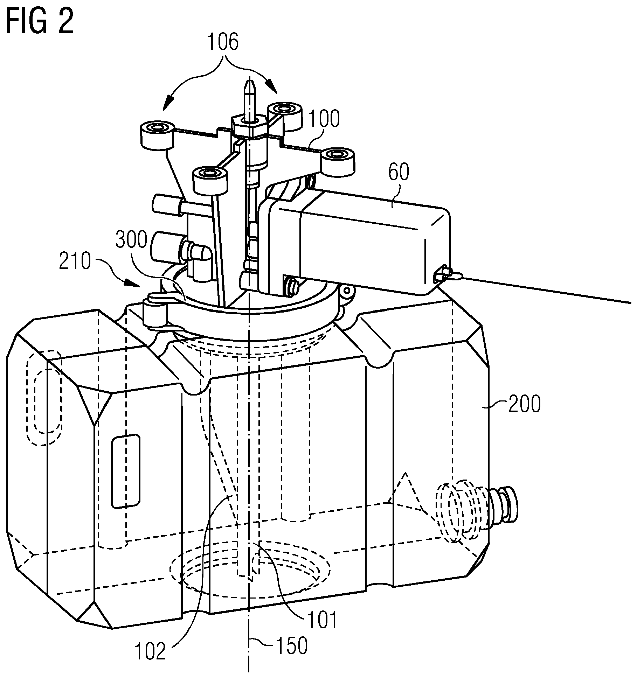

Fig. 2 schematically illustrates the system of Fig. 1 without the bottle when the manifold 100 is connected to the liquid container 200, according to various examples.

As can be seen in Fig. 2, the container 200, the manifold 100, and an optional retaining element 300, which may be used to secure the manifold 100 from falling off, are connected with each other. The manifold 100 comprises a support structure 106 with which a bottle (not shown) can be placed and held on the manifold 100. The manifold 100 is placed with its bottom on an opening 210 of the liquid container 200. The lower surface facing the opening 210 of the liquid container 200 includes a circumferential sealing protrusion 110 comprising an outer circumferential sealing surface 111. This sealing protrusion 110 is to be placed in the opening of the liquid container 200, such that the outer sealing surface 111 touches the walls of the opening, i.e., the inner sealing surface 211, to form a seal. The manifold 100 and the liquid container 200 are arranged relative to each other to have a common longitudinal axis 150.

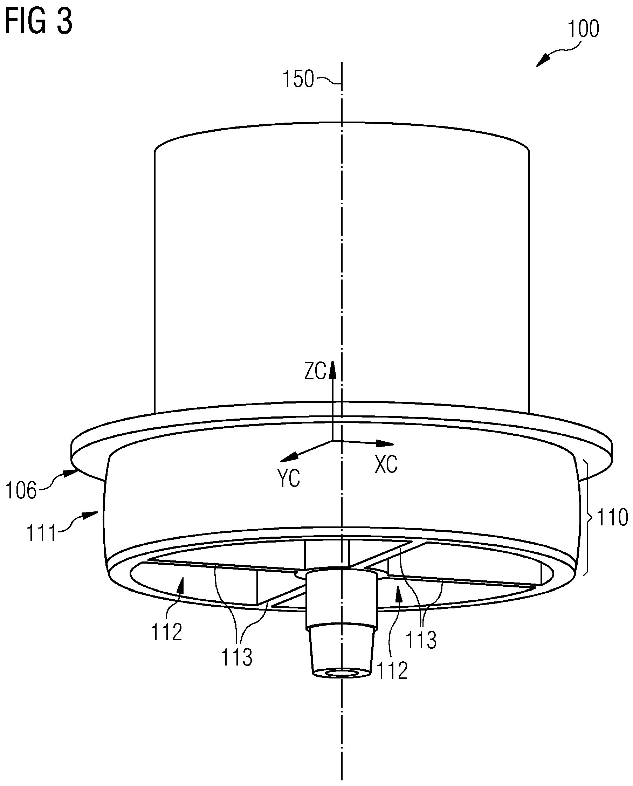

Fig. 3 schematically illustrates a part of a manifold 100 comprising a sealing protrusion 110, according to various examples.

As can be seen in Fig. 3, the manifold 100 has a longitudinal middle axis 150 and, on the middle axis 150, a longitudinal middle structure containing a flow channel for a fluid or air is arranged. It is to be understood that further flow channels may be implemented, which may be arranged in the inner surface of the sealing protrusion and lead air and/or fluid (i.e., liquid) from the liquid container through the opening to the outside of the liquid container. A flow channel may include a longitudinal axis, which may be aligned with, i.e., parallel to, the longitudinal axis of the manifold or the opening of the liquid container. A flow channel may comprise an opening through which air/liquid flows. A flow channel may have an inner circumferential surface in contact with the air/fluid. A flow channel may have an outer circumferential surface and a wall thickness defined by the inner and outer circumferential surfaces. A gap may be embodied between the outer circumferential surface of a flow channel and the inner circumferential surface of the sealing protrusion, such that the sealing protrusion may be deformed to the center, wherein also the inner circumferential surface of the sealing protrusion may be deformed to the center. The sealing protrusion may be an annular sealing protrusion. The manifold and the sealing protrusion may be integrally formed, i.e., by the same material and/or monolithically and/or in one part. The sealing protrusion may be integrally formed with the cover plate and/or the manifold body. The sealing protrusion may have a longitudinal end facing to the side where the liquid container is to be connected. The longitudinal end may be where the inner and outer circumferential surfaces of the sealing protrusion contact each other or are merged. A length of the sealing protrusion may be defined from the cover plate or body of the manifold to the longitudinal end. The inner circumferential surface of the sealing protrusion, which may be opposite the outer circumferential sealing surface of the sealing protrusion, may not be part of a sidewall of a flow channel. Therefore, when the sealing protrusion is deformed by the opening, no such deformation force may be exerted on a flow channel wall. Further connected to the middle structure is a support structure comprising support ribs 113 that extend from one side of the sealing protrusion 110 to the middle, and from the middle to the other side of sealing protrusion 110. The support ribs 113 are included to increase the strength of the sealing protrusion 110 against compression force onto the outer circumferential sealing surface 111. The support structure 113 extends in axial directions along the length of the sealing protrusion 110. The cover surface 106 is arranged, transversal to the longitudinal axis 150, in such a way that it contacts an upper rim of the opening of the liquid container 200 when fully inserted. The sealing protrusion 110 in the example of Fig. 3 is configured to be the rigid sealing partner, which elastically deforms the side walls of an opening of a liquid container. The contact area between the sealing protrusion and the sidewall (defined by the inner circumferential sealing surface of the opening) of the opening may not comprise an edge of the opening and/or the opening side wall, i.e., the inner circumferential sealing surface of the liquid container. In particular, it may be arranged inside the opening in a predefined distance from the edge along the longitudinal axis.

As further can be seen in Fig. 3, due to a material mass such as larger wall thickness in the sealing area of the manifold, which may be larger than the walls of the liquid container opening in the sealing area, the manifold may be firmer than the neck of the blow molded part (i.e., liquid container), in particular in the sealing area (i.e., the area where manifold touches the liquid container to form a seal). The manifold may be pushed into the opening of the blow molded part during assembly. The blow molded part may be pushed apart at the neck (i.e., opening where the manifold is inserted) and, thus, may create a seal. The blow molded part may deform slightly elastically. In such a way, inaccuracies in the parts may be compensated, such as uneven necks, oblique, even higher production tolerances may be used. It is to be understood that one or more features described may be applied to any other sealing protrusion described in the present disclosure.

Conversely, it is also possible not to strengthen the manifold and, thus, allow an elastic deformation of the manifold. As a result, the manifold adapts to the geometry of the blow molded part.

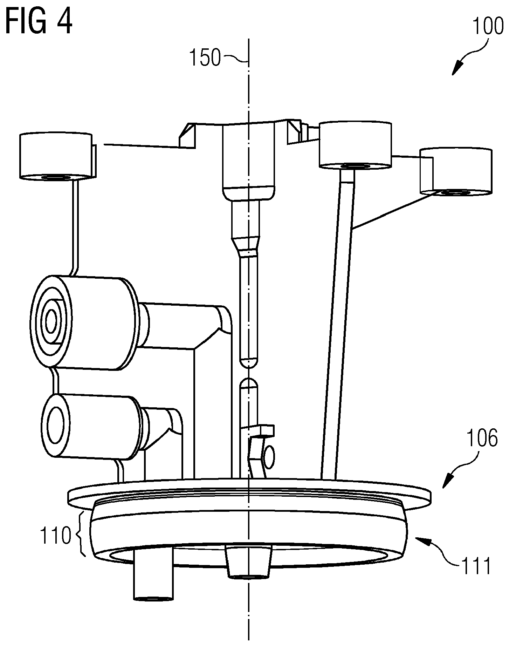

Fig. 4 schematically illustrates a manifold with a flexible sealing lip, according to various examples.

As can be seen in Fig. 4, the manifold 100 comprises a body with several flow channels in which fluid or air can flow through the sealing protrusion. In this regard, the sealing protrusion 100 defines an opening, or inner area, through which fluid is directed in a direction substantially along the longitudinal axis 150 through the sealing protrusion. The sealing protrusion 110 extends over an axial length around the longitudinal axis 150 and, on the upper end, is connected to a cover plate or cover surface 106, which defines an upper end of the sealing protrusion 110. An upper end/side/direction may refer to a side or direction on which the main body of the manifold is located with respect to the sealing protrusion, and a lower side/end/direction may refer to the side facing towards the liquid container. On the lower end, the sealing has the form of a loose fin, or loose end, which may be deformed by the opening side walls of a liquid container, when inserted into the opening. The sealing protrusion may have a dimension lateral or transverse to the longitudinal axis, which is larger than the transversal dimension of the liquid container opening.

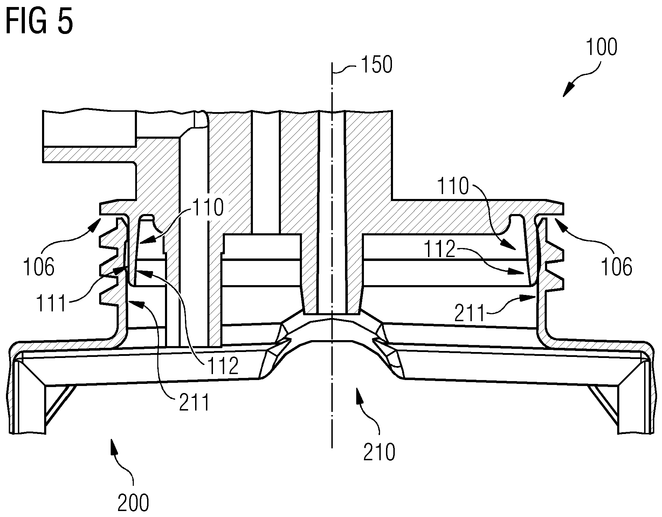

Fig. 5 schematically illustrates a system comprising a manifold 100 with a sealing protrusion 110 connected to an opening 210 of a liquid container 200, according to various examples.

In this example, the sealing lip on the manifold is the flexible sealing partner. Such flexible sealing lips can come in different configurations, depending on the design of the tool and the geometric and strength boundary conditions of the application.

As can be seen in Fig. 5, the sealing protrusion is fully inserted into the opening 210 defined by the walls of the liquid container 200. The sealing protrusion 110 is formed as a sealing lip extending from a cover surface 106 in direction to the liquid container 200. The outer circumferential sealing surface 111 of the sealing protrusion 110 is in contact with the inner sealing surface 211 of the opening 210. The inner sealing surface 211 of the opening 210 is formed by sidewalls, which extend substantially along the longitudinal axis 150.

Specifically, the sealing lip 110 is connected to the manifold cover surface 106 within the opening 210 such that it extends away from the longitudinal axis 150. In other words, it protrudes from the cover surface 106 and into the opening 210 to reach the opening side walls. Further, the sealing lip has an outer circumferential surface 111, which forms the seal against the liquid container, and an inner circumferential surface, which extends along the outer circumferential surface around the longitudinal axis 150, such that an opening is formed between the inner circumferential surface and the flow channel. The opening 210 extends from the cover surface 106 to the end of the sealing lip 110 along the longitudinal axis 150.

In the example of Fig. 5, the sealing lip has a material thickness in transversal direction which is substantially constant and in the range of the material wall thickness of the liquid container 200 at the opening 210. In some examples, the ratio of the length of the sealing protrusion 110 over the thickness of the sealing protrusion 110 may be larger than 3, or 4, or 5, or 6. The thickness of the sealing lip may be constant, or may not vary more than 5%, or 10%, or 20% from the average thickness. The outer sealing surface 111 is a convex surface, wherein it has a maximum circumferential length near the middle of the length. In such a way, the seal is formed by a contact area, which extends around the longitudinal axis 150 and extends over a contact length in an axial direction, which may, for example, be larger than the thickness of the sealing lip 110 in the contact area.

It is possible that the inner sealing surface 211 of the liquid container is also curved, e.g., concave, however, in a preferred embodiment the opening 210 has tubular walls, which extend substantially in parallel to the longitudinal axis.

In addition, the two components may be held together by means of a coupling nut. A thread in the coupling nut, matching the thread of the blow molded part, allows a quick disassembly/assembly. The coupling nut remains indestructible on the manifold.

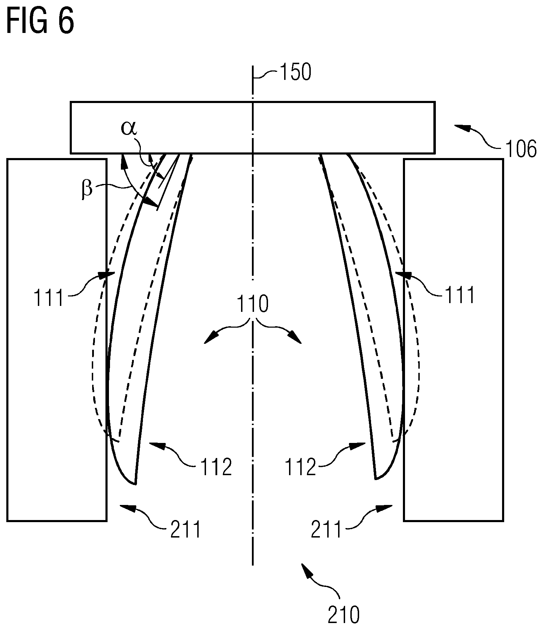

Fig. 6 schematically illustrates an elastic deformation of the sealing protrusion 110, according to various examples. The material thickness of the sealing lip 110, between the inner and outer circumferential surfaces 111, 112, in transversal directions to a middle line, is small, such that the entire sealing lip, specifically the outer and also the inner circumferential surface 212, is displaced when inserted into the opening in the connected state. In various examples, the ratio between the length in axial direction (e.g., the length of the middle line, or the length of a projection onto the longitudinal axis) and the thickness (i.e., maximum or average thickness, or thickness at each point along the length) between the inner and outer circumferential surfaces (i.e., perpendicular to the middle line) of the sealing lip, may be larger than 3, or larger than 4, or larger than 5, or larger than 6.

The dashed lines in Fig. 6 depict the dimensions of the sealing lip 110 in an unconnected state, as an overlay image. The sealing lip 110 is connected to the cover plate 106 in an area closer to the longitudinal axis 150 than the inner circumferential sealing surface 211, and extends outwards, such that its outer circumferential sealing surface 111 intersects with the walls of the opening 210. The inner circumferential surface 112 of the sealing lip 110 extends outward. In the unconnected state, the sealing lip 110 defines an angle α from the middle line to the transversal plane (or longitudinal axis) or the surface of the cover plate 106.

The solid lines in Fig. 6 depict the dimensions of the sealing lip 110, when inserted and connected to the opening 210. As can be seen, the sealing lip is deformed, wherein it is bent inwards and some material from the contact surface is displaced, such that the sealing lip 210 length is elongated in an axial direction. The inner circumferential surface 212 of the sealing lip 110 extends outward. In the connected state, the sealing lip 110 defines an angle β from the middle line to the transversal plane (or longitudinal axis) or the surface of the cover plate 106, which is larger than in the unconnected state. The same applies to the angles defined by the inner respectively outer circumferential surfaces 111, 112 to the surface of the cover plate 106, or a longitudinal axis. It is to be understood that, in Fig. 6, further flow channels may be embodied in the inner surface of the sealing protrusion, as describe in other embodiments.

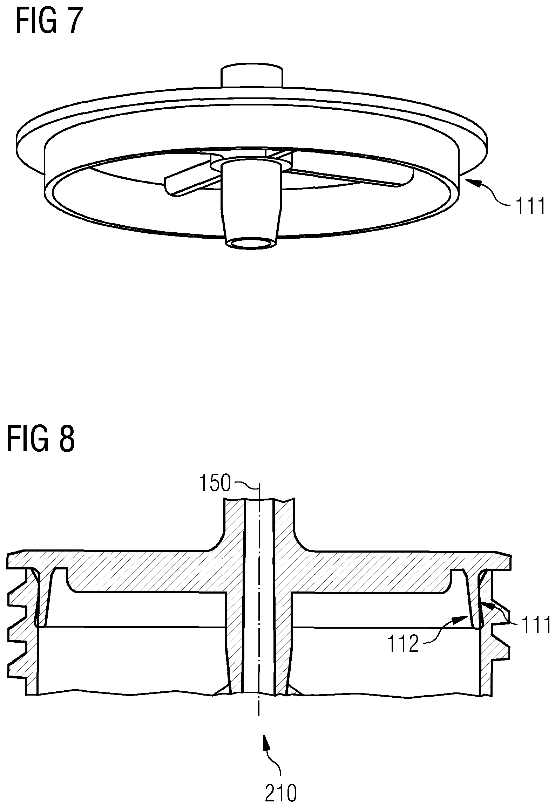

Fig. 7 schematically illustrates a further sealing protrusion 110 of a manifold, and Fig. 8 schematically illustrates the sealing protrusion of Fig. 7 connected to an opening 210 of a liquid container.

As can be seen in Figs. 7 and 8, the inner and outer circumferential surfaces 111, 112 have a smaller curvature, and the sealing protrusion 110 has a shorter length in an axial direction, such that the seal is formed in a contact area closer to the lower end of the sealing protrusion.

In addition to the actual sealing via a sealing lip, the design can also be combined with a commercially available O-ring or other additional sealing concepts, so that a fallback solution exists in the event of a malfunction of the sealing interface.

The advantage is, therefore, the design robustness over manufacturing inaccuracies of the individual components, since the sealing is carried out over a significantly larger area. In addition, the classic concept of a combination of rigid and soft components is implemented via the flexible sealing lip.

From the above descriptions, some general conclusions may be drawn:

According to the disclosed techniques, a sealing lip may not contact the inner circumferential surface of the opening within a predetermined distance from an entrance of the inner circumferential sealing surface (211) that faces towards the manifold. In such a way, the design becomes more robust against axial displacement and further may allow small angular displacement while the seal is maintained.

The sealing protrusion may not be integrally formed with a side wall of a flow channel for liquid/air of the manifold. There may be an open space between the sealing protrusion and a sidewall forming a flow channel.

A circumferential length may, in other words, refer to a peripheral length or circumference, i.e., length of a closed path on the inner or outer circumferential surface around the longitudinal axis (in directions perpendicular to the longitudinal axis). More generally, instead of the circumferential length, a material volume may be defined, which is to be displaced, when fitting the sealing protrusion into the opening, e.g., an overlay or overlap in 3D models of the parts. In general, in order to compare the circumferential paths lengths on the outer and inner circumferential, in a connected state, the corresponding paths may be parallel and/or arranged such that they may define a common plane perpendicular (i.e., traverse) to the longitudinal axis, or such that corresponding points are arranged in a transverse direction from the longitudinal plane.

In particular, the contact surface of the outer circumferential sealing surface may be curved along the longitudinal axis. The inner circumferential (i.e., annular) surface of the sealing protrusion, and/or the outer circumferential sealing surface, and/or the middle line between the inner and outer circumferential sealing surfaces, may have a constant curvature, or regular curvature, wherein the angle between a tangential (i.e., axis perpendicular to the surface or middle line normal) and the longitudinal axis of the manifold may not change faster than 10% from the average change, i.e., it may have the shape of a sealing lip with no irregularly shaped parts. A flow channel of the manifold and the sealing protrusion may be connected by a transversal cover plate of the manifold. The cover plate may extend along the gap between the sealing lip and the flow channel. The gap may have an annular shape, which is open on the liquid container side, i.e., has a depth along the longitudinal axis that is defined by the length of the sealing protrusion. In such a way, the sealing protrusion is pushed and/or deformed towards the center of the sealing protrusion or the manifold, i.e., towards the longitudinal axis. No stopping surface may be formed by the opening of the liquid container, which may limit or contact the sealing protrusion in an axial direction. The opening, and/or the inner circumferential sealing surface of the opening, and/or the contact surface (which may be a region of the inner/outer circumferential sealing surfaces in contact with each other in a connected state) of the inner side wall of the opening may be a tubular, i.e., cylindrical surface, i.e., without steps or other surface structures. The seal between the opening and the manifold may be established by only two integrally formed parts, i.e., the manifold and the liquid container, without further sealing rings or separate tubular elements. It is to be understood that using conventional O-Rings or a retaining element may be optional for increasing safety of the seal. The sealing protrusion may be formed rotationally symmetric around the longitudinal axis, or at least may be formed in such a way that the paths around the outer circumferential sealing surface that have the same curvature along the longitudinal axis may be at the same position on (along) the longitudinal axis, i.e., they do not form, e.g., a thread. In general, the sealing protrusion may have different circumferential lengths, and a maximum circumferential length, which are defined along closed circumferential paths around the longitudinal axis. Such a path may lie on a transversal plane with respect to the longitudinal axis. A manifold integrally forms an annular sealing lip with a curvature along a longitudinal axis of the manifold, the sealing protrusion being fully inserted into a cylindrical opening of the liquid container in a connected state to form a contour seal to the tubular side walls of the opening. In an unconnected state, a circumferential length of the outer circumferential sealing surface of the sealing protrusion is larger than a circumferential length of the inner circumferential sealing surface of the liquid container opening, i.e., one of the two sealing surfaces is elastically deformed by the other surface.

Summarizing, the manifolds and systems are self-sealing, which seal by using deformation forces resulting from the difference in the circumflexes of the inner diameter of the blow molded part and the outer diameter of the manifold. In a preferred embodiment, the blow molded bottle neck is the stiffer part of the two sealing partners. This design illustrates increasing sealing properties with an increasing inner operating pressure.

By the disclosed techniques, an improved sealing mechanism is provided, which is more robust against manufacturing tolerances of the manifold and liquid containers, and angular and positional process tolerances during handing and application of a manifold on a liquid container. Cost advantages may be reached by not requiring an axial force of the manifold onto the liquid container for realizing the seal.

## Claims

1. A sealing system comprising:
a liquid container (200) configured to hold a liquid, wherein the liquid container (200) defines an opening (210) having an inner circumferential sealing surface (211) surrounding the opening (210); and
a manifold (100) through which liquid is supplied to and/or removed from the liquid container (200), wherein the manifold (100) comprises a sealing protrusion (110) having an outer circumferential sealing surface (111), which is curved along a longitudinal axis;
wherein, in a connected state, the manifold (100) is located on the opening (210) to supply liquid to, or to remove liquid from, the liquid container (200), the sealing protrusion (110) extends into the opening (210), and
the outer circumferential sealing surface (111) contacts the inner circumferential sealing surface (211) to form a seal between the manifold (100) and the liquid container (200), and
wherein, in an unconnected state, a circumferential length of the outer circumferential sealing surface (111) is larger than a circumferential length of the inner circumferential sealing surface (211),
**characterized in that** the outer circumferential sealing surface (111) defines at least one additional circumferential sealing lip that extends from the outer sealing surface (111) in a direction along the longitudinal axis towards the liquid container (200) and contacts the inner sealing surface (211).

2. The system of claim 1, wherein the outer circumferential sealing surface (111) is a convex surface along the longitudinal axis.

3. The system of claim 1, wherein a maximum circumferential length of the outer circumferential sealing surface (111) in an axial direction is located within a region of the sealing protrusion (110), which begins at the end of the sealing protrusion (110) facing towards the liquid container (200) and extends over 2/3 of an axial length of the sealing protrusion (110) in the axial direction.

4. The system of claim 1, wherein, in the connected state, the sealing protrusion (110) elastically deforms the inner circumferential sealing surface (211) of the opening (210).

5. The system of claim 1, wherein the sealing protrusion (110) is shaped as a sealing lip extending along the longitudinal axis, wherein the sealing protrusion (110) further has an inner circumferential surface (112), which extends along the outer circumferential sealing surface (111).

6. The system of claim 5, wherein a ratio of the length of the sealing lip over the thickness of the sealing lip is larger than 3.

7. The system of claim 5, wherein the inner circumferential surface of the sealing protrusion (110) is a curved surface, wherein the inner circumferential surface of the sealing protrusion (110) preferably is a concave surface.

8. The system of claim 1, wherein the liquid container (200) has an inner pressure, which is higher than a pressure of an environment surrounding the manifold outside the liquid container (200).

9. The system of claim 8, wherein the higher pressure inside the liquid container (200) applies a force onto the inner circumferential surface of the sealing lip, whereby the sealing protrusion (110) is pressed against the inner circumferential sealing surface (211) of the opening (210).

10. The system of claim 1, wherein the sealing protrusion (110) is elastically deformed by contact to the inner sealing surface (211), and material from the contact area is displaced such that the sealing protrusion (110) is elongated in a direction towards the liquid container (200).

11. The system of claim 1, wherein, in an unconnected state, the outer circumferential sealing surface (111) extends away from the longitudinal axis of the manifold (100).

12. The system of claim 1, wherein a cross-sectional area of the opening (210) and a corresponding cross-sectional area of the sealing protrusion (110) do not have a circular shape.

13. The system of claim 1, wherein the outer circumferential sealing surface (111) is not axially symmetric with regard to the longitudinal axis.

14. The system of claim 1, wherein the sealing protrusion (110) has a stiffer upper region, which elastically deforms the inner circumferential sealing surface (211) of the opening (210), and an elastic lower section, which is elastically deformed by the inner circumferential sealing surface (211).

## Patentansprüche

1. Dichtungssystem, umfassend:
einen Flüssigkeitsbehälter (200), der dazu ausgelegt ist, eine Flüssigkeit zu enthalten, wobei der Flüssigkeitsbehälter (200) eine Öffnung (210) mit einer inneren Umfangsdichtungsfläche (211) definiert, die die Öffnung (210) umgibt; und
einen Verteiler (100), durch den Flüssigkeit dem Flüssigkeitsbehälter (200) zugeführt und/oder aus diesem entfernt wird, wobei der Verteiler (100) einen Dichtungsvorsprung (110) mit einer äußeren Umfangsdichtungsfläche (111) umfasst, die entlang einer Längsachse gekrümmt ist;
wobei sich der Verteiler (100) in einem verbundenen Zustand an der Öffnung (210) befindet, um Flüssigkeit dem Flüssigkeitsbehälter (200) zuzuführen oder aus diesem zu entfernen,
wobei sich der Dichtungsvorsprung (110) in die Öffnung (210) erstreckt und
wobei die äußere Umfangsdichtungsfläche (111) die innere Umfangsdichtungsfläche (211) berührt, um eine Dichtung zwischen dem Verteiler (100) und dem Flüssigkeitsbehälter (200) auszubilden, und
wobei in einem nicht verbundenen Zustand die Umfangslänge der Außenumfangsdichtungsfläche (111) größer als die Umfangslänge der Innenumfangsdichtungsfläche (211) ist,
**dadurch gekennzeichnet, dass** die äußere Umfangsdichtungsfläche (111) mindestens eine zusätzliche Umfangsdichtungslippe definiert, die sich von der äußeren Dichtungsfläche (111) in eine Richtung entlang der Längsachse zum Flüssigkeitsbehälter (200) erstreckt und die innere Dichtungsfläche (211) berührt.

2. System nach Anspruch 1, wobei die äußere Umfangsdichtungsfläche (111) eine konvexe Fläche entlang der Längsachse ist.

3. System nach Anspruch 1, wobei sich die maximale Umfangslänge der äußeren Umfangsdichtungsfläche (111) in axiale Richtung innerhalb eines Bereichs des Dichtungsvorsprungs (110) befindet, der am dem Flüssigkeitsbehälter (200) zugewandten Ende des Dichtungsvorsprungs (110) beginnt und sich über 2/3 einer axialen Länge des Dichtungsvorsprungs (110) in die axiale Richtung erstreckt.

4. System nach Anspruch 1, wobei der Dichtungsvorsprung (110) im verbundenen Zustand die innere Umfangsdichtungsfläche (211) der Öffnung (210) elastisch verformt.

5. System nach Anspruch 1, wobei der Dichtungsvorsprung (110) als Dichtungslippe geformt ist, die sich entlang der Längsachse erstreckt, wobei der Dichtungsvorsprung (110) ferner eine Innenumfangsfläche (112) aufweist, die sich entlang der äußeren Umfangsdichtungsfläche (111) erstreckt.

6. System nach Anspruch 5, wobei das Verhältnis der Länge der Dichtungslippe über die Dicke der Dichtungslippe größer als 3 ist.

7. System nach Anspruch 5, wobei die innere Umfangsfläche des Dichtungsvorsprungs (110) eine gekrümmte Fläche ist, wobei die innere Umfangsfläche des Dichtungsvorsprungs (110) vorzugsweise eine konkave Fläche ist.

8. System nach Anspruch 1, wobei der Flüssigkeitsbehälter (200) einen Innendruck aufweist, der höher ist als der Umgebungsdruck, der den Verteiler außerhalb des Flüssigkeitsbehälters (200) umgibt.

9. System nach Anspruch 8, wobei der höhere Druck innerhalb des Flüssigkeitsbehälters (200) eine Kraft auf die innere Umfangsfläche der Dichtungslippe aufbringt, wodurch der Dichtungsvorsprung (110) gegen die innere Umfangsdichtungsfläche (211) der Öffnung (210) gedrückt wird.

10. System nach Anspruch 1, wobei der Dichtungsvorsprung (110) durch Kontakt mit der inneren Dichtungsfläche (211) elastisch verformt wird und Material aus dem Kontaktbereich so verschoben wird, dass der Dichtungsvorsprung (110) in eine Richtung zum Flüssigkeitsbehälter (200) verlängert ist.

11. System nach Anspruch 1, wobei sich die äußere Umfangsdichtungsfläche (111) in einem nicht verbundenen Zustand von der Längsachse des Verteilers (100) weg erstreckt.

12. System nach Anspruch 1, wobei die Querschnittsfläche der Öffnung (210) und die entsprechende Querschnittsfläche des Dichtungsvorsprungs (110) nicht kreisförmig sind.

13. System nach Anspruch 1, wobei die äußere Umfangsdichtungsfläche (111) bezüglich der Längsachse nicht axialsymmetrisch ist.

14. System nach Anspruch 1, wobei der Dichtungsvorsprung (110) einen steiferen oberen Bereich, der die innere Umfangsdichtungsfläche (211) der Öffnung (210) elastisch verformt, und einen elastischen unteren Abschnitt, der durch die innere Umfangsdichtungsfläche (211) elastisch verformt wird, aufweist.

## Revendications

1. Système d'étanchéité comprenant :
un récipient de liquide (200) configuré pour contenir un liquide, le récipient de liquide (200) définissant une ouverture (210) ayant une surface d'étanchéité circonférentielle interne (211) entourant l'ouverture (210) ; et
un collecteur (100) par lequel du liquide est amené et/ou retiré du récipient de liquide (200), le collecteur (100) comprenant une saillie d'étanchéité (110) ayant une surface d'étanchéité circonférentielle externe (111), qui est incurvée le long d'un axe longitudinal ;
dans un état raccordé, le collecteur (100) étant situé sur l'ouverture (210) pour fournir du liquide au, ou pour retirer du liquide du récipient de liquide (200),
la saillie d'étanchéité (110) s'étendant dans l'ouverture (210), et
la surface d'étanchéité circonférentielle externe (111) entrant en contact avec la surface d'étanchéité circonférentielle interne (211) pour former un joint d'étanchéité entre le collecteur (100) et le récipient de liquide (200), et
dans un état non raccordé, une longueur circonférentielle de la surface d'étanchéité circonférentielle externe (111) étant plus grande qu'une longueur circonférentielle de la surface d'étanchéité circonférentielle interne (211),
**caractérisé en ce que** la surface d'étanchéité circonférentielle externe (111) définit au moins une lèvre d'étanchéité circonférentielle additionnelle qui s'étend depuis la surface d'étanchéité externe (111) dans une direction le long de l'axe longitudinal vers le récipient de liquide (200) et entre en contact avec la surface d'étanchéité interne (211).

2. Système selon la revendication 1, la surface d'étanchéité circonférentielle externe (111) étant une surface convexe le long de l'axe longitudinal.

3. Système selon la revendication 1, une longueur circonférentielle maximale de la surface d'étanchéité circonférentielle externe (111) dans une direction axiale étant située à l'intérieur d'une région de la saillie d'étanchéité (110), qui commence à l'extrémité de la saillie d'étanchéité (110) tournée vers le récipient de liquide (200) et s'étend sur 2/3 d'une longueur axiale de la saillie d'étanchéité (110) dans la direction axiale.

4. Système selon la revendication 1, dans l'état raccordé, la saillie d'étanchéité (110) déformant élastiquement la surface d'étanchéité circonférentielle interne (211) de l'ouverture (210).

5. Système selon la revendication 1, la saillie d'étanchéité (110) ayant la forme d'une lèvre d'étanchéité s'étendant le long de l'axe longitudinal, la saillie d'étanchéité (110) ayant en outre une surface circonférentielle interne (112), qui s'étend le long de la surface d'étanchéité circonférentielle externe (111).

6. Système selon la revendication 5, un rapport de la longueur de la lèvre d'étanchéité sur l'épaisseur de la lèvre d'étanchéité étant supérieur à 3.

7. Système selon la revendication 5, la surface circonférentielle interne de la saillie d'étanchéité (110) étant une surface incurvée, la surface circonférentielle interne de la saillie d'étanchéité (110) étant de préférence une surface concave.

8. Système selon la revendication 1, le récipient de liquide (200) ayant une pression interne qui est supérieure à une pression d'un environnement entourant le collecteur à l'extérieur du récipient de liquide (200).

9. Système selon la revendication 8, la pression plus élevée à l'intérieur du récipient de liquide (200) appliquant une force sur la surface circonférentielle interne de la lèvre d'étanchéité, grâce à quoi la saillie d'étanchéité (110) est pressée contre la surface d'étanchéité circonférentielle interne (211) de l'ouverture (210).

10. Système selon la revendication 1, la saillie d'étanchéité (110) étant déformée élastiquement par contact avec la surface d'étanchéité interne (211), et le matériau provenant de la zone de contact étant déplacé de telle sorte que la saillie d'étanchéité (110) est allongée dans une direction vers le récipient de liquide (200).

11. Système selon la revendication 1, dans un état non raccordé, la surface d'étanchéité circonférentielle externe (111) s'étendant à l'écart de l'axe longitudinal du collecteur (100).

12. Système selon la revendication 1, une surface de section transversale de l'ouverture (210) et une surface de section transversale correspondante de la saillie d'étanchéité (110) n'ayant pas une forme circulaire.

13. Système selon la revendication 1, la surface d'étanchéité circonférentielle externe (111) n'étant pas axialement symétrique par rapport à l'axe longitudinal.

14. Système selon la revendication 1, la saillie d'étanchéité (110) ayant une région supérieure plus rigide, qui déforme élastiquement la surface d'étanchéité circonférentielle interne (211) de l'ouverture (210), et une section inférieure élastique, qui est déformée élastiquement par la surface d'étanchéité circonférentielle interne (211).
